# EUROPÄISCHE PATENTSCHRIFT

(11) **EP 0 421 113 B1**
(45) Veröffentlichungstag und Bekanntmachung des Hinweises auf die Patenterteilung: **03.03.1993**
(21) Anmeldenummer: 90116243.8
(22) Anmeldetag: 21.08.1990
(51) Int. Cl.: B65D 25/52, G01F 11/38

(54) **Dosiervorrichtung zum exakten Abfüllen von Flüssigkeiten**
Dosing device for precise decanting of liquids
Dispositif doseur pour soutirage précis de liquides

(30) Priorität: 25.08.1989 DE 3928057
(43) Veröffentlichungstag der Anmeldung: 10.04.1991
(73) Patentinhaber: Tödter, Manfred, 29643 Neuenkirchen (DE)
(72) Erfinder: Tödter, Manfred, 29643 Neuenkirchen (DE)
(74) Vertreter: Schramm, Ewald Werner Josef

(56) Entgegenhaltungen:
- CH-A- 163 246
- DE-A- 3 014 267
- DE-B- 1 206 752

## Beschreibung

Die Erfindung bezieht sich auf eine Dosiervorrichtung zum exakten Abfüllen gießfähiger Flüssigkeiten nach dem ober begriff des Anspruchs 1.

Zum Abfüllen von Flüssigkeiten bestimmter Volumina ist es bekannt Meßeinrichtungen, wie Meßbecher, zu benutzen. Solche Meßeinrichtungen gestatten es, bestimmte Mengen der jeweiligen Flüssigkeit aus Behältern, wie Tankvorrichtungen, zu entnehmen und der beabsichtigten Verwendung zuzuführen. Auf diese Weise können giftige, ätzende oder ungiftige Flüssigkeiten abgefüllt und in der gebotenen Weise gebraucht werden. Während das Abfüllen solcher Flüssigkeiten in Laboreinrichtungen, wo entsprechende Meßeinrichtungen zur Verfügung stehen, grundsätzlich keine besonderen Probleme bereitet, macht das Abfüllen und Verwerten dosierter Flüssigkeiten bei unzureichenden Meßeinrichtungen erhebliche Schwierigkeiten. So ist z.B. das Abfüllen flüssiger Pflanzenschutzmittel, Reinigungsmittel, Düngemittel, Lebensmittel und dergleichen in vielen Anwendungsfällen ungenau und schwierig und entspricht daher häufig nicht den zu beachtenden Vorschriften.

Wie aus der US-A-35 56 353 hervorgeht, ist es auch bekannt, Pumpvorrichtungen zum exakten Abfüllen gießfähiger Flüssigkeiten zu benutzen. So zeigt die zuvor angegebene Druckschrift eine auf den Hals einer Flasche aufsetzbare Pumpvorrichtung, bestehend aus einem Abfüllstutzen aus Glas, dessen Durchgang als Zylinderbohrung zur Aufnahme eines darin hin und der bewegbaren Glaskolbens ausgebildet ist.

Zwei Ventile, und zwar ein in einer Verengung am unteren Ende der Zylinderbohrung vorgesehenes Kugelventil und ein weiteres, am unteren Ende in einer Durchgangsbohrung des Glaskolbens vorgesehenes Kugelventil, sichern beim Pumpen die Saug- und Druckbedingungen, so daß durch Hochziehen und Niederdrücken des Glaskolbens mit einem Verbindungsrohr bestimmte, vom Hub abhängige und an einer Skala ablesbare Volumina entnehmbar sind. Für den Einsatz außerhalb von Laboreinrichtungen ist eine solche Pumpvorrichtung aber unzweckmäßig.

Bei einer gattungsgemäßen Dosiervorrichtung (CH-A-163 246) wird über einen, mittels eines Kippvorganges bewegbaren Doppelkolben dosiert.

Der Erfindung liegt die Aufgabe zugrunde, eine Dosiervorrichtung zum exakten Abfüllen gießfähiger Flüssigkeiten aus Behältern mit einem Abfüllstutzen zu schaffen, welche mit einem einfachen Kippvongang einen genauen, sicheren und zuverlässigen Gebrauch gestattet. Diese Aufgabe ist gemäß der Erfindung durch eine Dosiervorrichtung mit den Merkmalen des Anspruchs 1 gelöst.

Die erfindungsgemäße Dosiervorrichtung erlaubt es daher durch einmaliges Kippen eines mit der Vorrichtung versehenen Behälters genau dosierte Volumina gießfähigher Flüssigkeiten abzufüllen, ohne zusätzliche Meßeinrichtungen zu benutzen.

Weiterbildungen und vorteilhafte Ausgestaltungen der Erfindung sind den Ansprüchen 2 bis 11 zu entnehmen.

Die Erfindung wird anhand der beiliegenden Zeichnung näher erläutert. Es zeigen:
Fig. 1 - Fig. 3 einen Flüssigkeitsbehälter mit einer Dosiervorrichtung in drei verschiedenen Lagen,
Fig. 4 einen Ausschnitt eines Flüssigkeitsbehälters mit einer Dosiervorrichtung,
Fig. 5 eine Dosiervorrichtung im Schnitt,
Fig. 6 einen Schnitt VI-VI gemäß Fig. 5,
Fig. 7 eine Doppelkolben,
Fig. 8 einen Schnitt VIII-VIII gemäß Fig. 5 und
Fig. 9 einen Ausschnitt eines Abfüllstutzens in vergrößerter Darstellung.

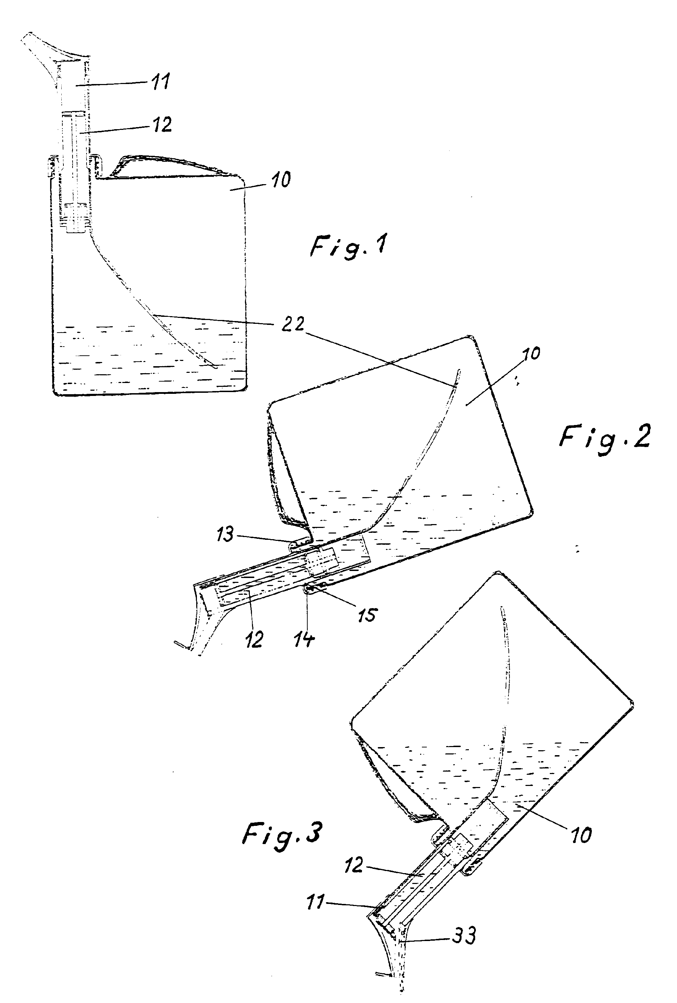

Wie die Darstellungen nach Fig. 1 bis Fig. 3 zeigen, ist ein Flüssigkeitsbehälter 10 mit einem Abfüllstutzen 11 versehen, in dem eine Dosiervorrichtung 12 zum exakten Abfüllen untergebracht ist. Dieser Abfüllstutzen 11 ist mit Hilfe einer Überwurfmutter 13 und einem Ringansatz 15 an einem Behälteranschluß 14 des Behälters 10 verschraubt. Anstatt des Aufschraubens ist es auch möglich den Abfüllstutzen 11 aufzustecken, anzuklemmen oder fest am Behälter 10 anzubringen. Die Dosiervorrichtung 12 erlaubt es daher dosierte Flüssigkeitsmengen durch einmaliges Kippen des Behälters 10 zunächst abzufüllen (Fig. 2) und durch weiteres Kippen (Fig. 3) zu entleeren.

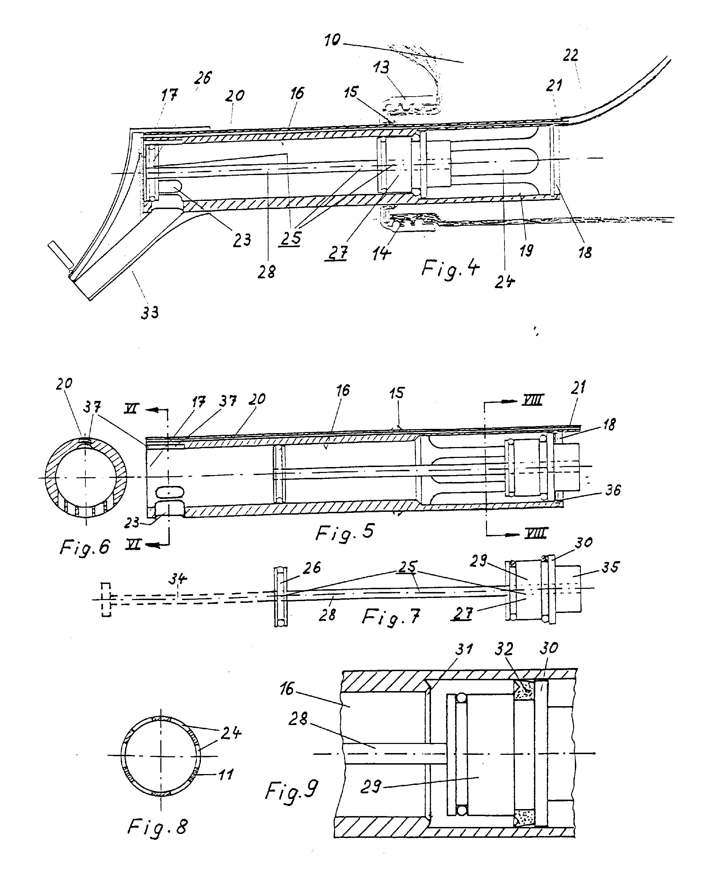

Wie der Ausschnitt des Behälters 10 nach Fig. 4 zeigt, besteht die Dosiervorrichtung 12 zum exakten Abfüllen gießfähigher Flüssigkeiten aus einer in dem Abfüllstutzen 11 vorgesehenen Zylinderbohrung 16, in die ein Doppelkolbens 25 eingesetzt ist. Der Doppelkolben 25 besteht aus einem den Stutzenausgang 17 beeinflussenden Kolben 26 geringer Höhe und einem damit über eine Kolbenstange 28 verbundenen, auf den Stutzeneingang 18 einwirkenden Stufenkolben 27. Dieser Stufenkolben 27 besteht aus einem länglichen, in seinem Durchmesser dem Kolben 26 entsprechenden Schließkolben 29 und einem Stegkolben 30 etwas größeren Durchmessers. Die Zylinderbohrung 16 im Abfüllstutzen 11 ist dazu am Stutzeneingang 18 mit einer dem Stegkolben 30 angepaßten Erweiterung 19 versehen. Diese Erweiterung 19 reicht vom Stutzeneingang 18 bis über die am Stutzeneingang vorgesehenen Durchgänge 24. Der Übergang dieser Erweiterung ist in Fig. 9 dargestellt. Dort ist gezeigt, daß der Übergang vorteilhafterweise auch als Ventilkegel 31 ausgebildet sein kann, gegen den sich eine am Stegkolben 30 abstützende Ventildichtung 32 am Ende eines Dosiervorganges legt. Am Stutzenausgang 17 sind in der Stutzenwand ebenfalls Durchgänge 23 für die Flüssigkeit vorgesehen, und die Stutzenwand ist noch mit einer Entlüftungsbohrung 20 versehen, welche am Stutzeneingang in einem Nippel 21 endet. Auf diesen Nippel 21 ist ein in den Flüssigkeitsbehälter 10 ragender Entlüftungsschlauch 22 aufgesteckt. Der Abfüllstutzen 11 kann wie in Fig. 1 bis Fig. 3 dargestellt, auch einen Gießnippel 33 tragen.

Beim Abfüllen der jeweiligen Flüssigkeit wird durch Kippen des Behälters 10 die Dosiervorrichtung 12 zunächst gefüllt. Die Flüssigkeit dringt dabei durch die Durchgänge 24 am Stutzeneingang 18 in die Zylinderbohrung 16 ein, und zwar in den Raum zwischen dem Kolben 26 und dem Stufenkolben 27. Das abfüllbare Volumen wird dabei vom Durchmesser der Zylinderbohrung 16, dem Abstand des Kolbens 26 zum Schließkolben 29 des Stufenkolbens 27 sowie dem Durchmesser der Kolbenstange 28 bestimmt. Nach dem Füllen der Dosiervorrichtung 12 wird durch weiteres Kippen des Behälters 10 der Doppelkolben 25 aufgrund seines Eigengewichtes zum Stutzenausgang 17 bewegt, wobei der Schließkolben 29 zuerst den Übergang von der Erweiterung 19 zur Zylinderbohrung 16 schließt, bevor durch weiteres Verschieben des Doppelkolbens 25 der Kolben 26 am Stutzenausgang 17 über die Durchgänge 23 am Stutzenausgang gleitet und das Ausgießen der abgefüllten Dosis einleitet. Ein Belüftungsschlitz 37 am Stutzenausgang reicht bis in den Dosierraum und beschleunigt das Entleeren des Dosierungsraumes.
Wie Fig. 9 zeigt, legt sich der Stegkolben 30 des Stufenkolbens 27 mit einer Ventildichtung 32, die in ihrem Querschnitt der Form des Ventilkegels angepaßt ist, dagegen und bewirkt einen exakten Abschluß zum Behälter 10. Aus dem Behälter 10 kann daher in der Kippstellung gemäß Fig. 3 keine Flüssigkeit aus dem Behälter nachfließen. Durch Zurückbewegen in die Ausgangsstellung nach Fig. 1 kann der Dosiervorgang wiederholt werden. Es ist aber auch möglich, am Kolben 26 einen Taststift 34, wie in Fig. 7 gestrichelt angedeutet, anzubringen und in der Kippstellung nach Fig. 3 durch Drücken auf den Taststift 34 einen Dosiervorgang zu wiederholen.
Die Entlüftungsbohrung 20 in der Wand des Abfüllstutzens 11 sorgt beim Abfüllen in bekannter Weise für einen Druckausgleich, und zwar durch Luftzuführung, welche über den Nippel 21 und den Entlüftungsschlauch 22 in den Flüssigkeitsbehälter gelangt.

Es ist zweckmäßig, mehrere Dosiervorrichtungen als auswechselbaren Satz aus Abfüllstutzen 11 und Doppelkolben 25 verschiedener Größen zusammenzustellen, um bestimmte zu dosierende Volumina abzufüllen. Abfüllstutzen 11 und zugehörige Doppelkolben 25 werden zweckmäßigerweise aus gegen aggressive Flüssigkeiten, wie Säuren oder Laugen, resistenten Werkstoffen hergestellt. Außerdem ist es zweckmäßig, den Doppelkolben 25 aus einem Werkstoff hinreichender Dichte herzustellen, damit dieser ein den Abfüllvorgang unterstützendes hinreichendes Eigengewicht erhält. Wie in den Abbildungen gezeigt, kann der Doppelkolben 25, insbesondere der Stufenkolben 27, auch einen nach hinten sich ausdehnenden Blindkolben 35 aufweisen, damit der Doppelkolben ein entsprechendes Eigengewicht erhält. Im Kolben 26 sowie im Stufenkolben 27 sind entsprechende Nuten vorgesehen, um Dichtringe normaler O-Form, spezielle Dichtringe oder Kolbenringe aufzunehmen. Diese Dichtringe werden in Form und Werkstoff je nach Verwendung ausgewählt. Weiterhin ist es auch möglich, die Stufenkolben 27 der Doppelkolben 25 auswechselbar an der Kolbenstange 28 anzubringen. Hierdurch ist es möglich, Stufenkolben gleicher Durchmesser, aber mit unterschiedlich langen Schließkolben in die Zylinderbohrung 16 eines Abfüllstutzens einzusetzen, wodurch sich eine Einstellmöglichkeit für abzufüllende Volumina ergibt. Der Doppelkolben kann durch Entfernen eines am Stutzeneingang 18 vorgesehen Sprengringes 36 aus der Zylinderbohrung 16 herausgenommen werden.

Die erfindungsgemäße Dosiervorrichtung gestattet es daher, bestimmte von der Bemessung abhängige Volumina mit großer Genauigkeit abzufüllen.

Für größere abzufüllende Volumina ist es auch möglich, den Abfüllstutzen im Bereich außerhalb des Behälters zu erweitern, so daß sich eine größere Zylinderbohrung und damit auch ein größerer Kolben 26 ergibt. Für ein Auswechseln zum Verändern des abzufüllenden Volumens ist es dann aber notwendig, den Kolben 26 vom Stufenkolben 27 zu lösen und durch den Stutzenausgang zu entnehmen. Die Funktion und der Abfüllvorgang bleiben aber unverändert. Der Doppelkolben kann dabei auch als Hohlkolben bzw. als Container ausgebildet sein.

## Patentansprüche

1. Dosiervorrichtung zum exakten Abfüllen gießfähiger Flüssigkeiten, mit einem Behälter und einem auf einen Behälteranschluß aufsetzbaren Abfüllstutzen, dessen Durchgang zur Aufnahme eines darin hin und her bewegbaren Doppelkolbens als Zylinderbohrung mit Durchgängen in der Stutzenwand am Stutzeneingang und am Stutzenausgang ausgebildet ist, dadurch gekennzeichnet, daß der Doppelkolben (25) aus einem den Stutzenausgang (17) beeinflussenden Kolben (26) geringer Höhe und einem damit über eine Kolbenstange (28) verbundenen, auf den Stutzeneingang (18) einwirkenden Stufenkolben (27) besteht, daß die Zylinderbohrung (16) des Abfüllstutzens (11) zur Aufnahme des Stufenkolbens (27) als Stufenbohrung ausgebildet ist, deren Erweiterung (19) am Stutzeneingang (18) mit dem Durchmesser eines Stegkolbens (30) vom Stufenkolben (27) übereinstimmt, und daß in der Stutzenwand eine sich über die gesamte Länge des Stutzens (11) erstreckende Entlüftungsbohrung (20) mit einem Nippel (21) zum Anschluß eines in den Behälter (10) ragenden Entlüftungsschlauches (22) vorgesehen ist.

2. Dosiervorrichtung nach Anspruch 1, dadurch gekennzeichnet, daß die Kolbenstange (28) des Doppelkolbens (25) in Länge und Durchmesser sowie der Durchmesser des Zylinderbohrung (16) auf das zum dosierten Abfüllen entsprechende Volumen bemessen ist.

3. Dosiervorrichtung nach Anspruch 1 oder 2, dadurch gekennzeichnet, daß die Durchgänge (23, 24) in der Stutzenwand derart angeordnet sind, daß beim Bewegen des Doppelkolbens (25) das Öffnen des Stutzenausganges (17) nach dem Schließen des Stutzeneinganges (18) erfolgt.

4. Dosiervorrichtung nach einem der Ansprüche 1 bis 3, dadurch gekennzeichnet, daß der Abfüllstutzen (11) einen äußeren Ringansatz (15) aufweist zum auswechselbaren Befestigen mit einem Anschlußelement an einem Behälteranschluß.

5. Dosiervorrichtung nach einem der Ansprüche 1 bis 4, dadurch gekennzeichnet, daß mehrere Abfüllstutzen (11) und darin einsetzbare Doppelkolben (25) zu einem auswechselbaren Satz bestimmter zu dosierender Volumina zusammengestellt sind.

6. Dosiervorrichtung nach einem der Ansprüche 1 bis 5, dadurch gekennzeichnet, daß der Abfüllstutzen (11) und der darin eingesetzte Doppelkolben (25) aus einem gegen aggressive Flüssigkeiten resistenten Werkstoff bestehen.

7. Dosiervorrichtung nach einem der Ansprüche 1 bis 6, dadurch gekennzeichnet, daß der Doppelkolben (25) mit einem Taststift (34) zum Wiederholen eines dosierten Abfüllvorganges in der Abfüllstellung des Behälters (10) versehen ist.

8. Dosiervorrichtung nach einem der Ansprüche 1 bis 7, dadurch gekennzeichnet, daß der Doppelkolben (25) aus einem Werkstoff hinreichender Dichte zur Unterstützung des Abfüllvorganges besteht.

9. Dosiervorrichtung nach einem der Ansprüche 1 bis 8, dadurch gekennzeichnet, daß der Kolben (26) und der Stufenkolben (27) des Doppelkolbens (25) mit Nuten für Dichtringe geeigneter Form und geeigneten Werkstoffes versehen ist.

10. Dosiervorrichtung nach einem der Ansprüche 1 bis 9, dadurch gekennzeichnet, daß mehrere auswechselbare Stufenkolben (27) mit unterschiedlich langen Schließkolben (29) zur Veränderung des Dosiervolumens vorgesehen sind.

11. Dosiervorrichtung nach einem der Ansprüche 1 bis 10, dadurch gekennzeichnet, daß der Abfüllstutzen (11) im Bereich außerhalb des Behälters (10) zur Erweiterung der Zylinderbohrung (16) vergrößert ist, und daß der Kolben (26) dem Durchmesser der Erweiterung angepaßt ist.

## Claims

1. A dosing apparatus for accurately dispensing pourable liquids, comprising a container and a dispensing nozzle which can be placed on a container connection, wherein the passage through the nozzle is in the form of a cylinder bore to accommodate a double piston reciprocable therein, with passages in the nozzle wall at the nozzle inlet and outlet, characterised in that the double piston (25) comprises a short piston (26) affecting the nozzle outlet (17) and, connected thereto by a piston rod (28), a stepped piston (27) acting on the nozzle inlet (18), that the cylinder bore (16) of the dispensing nozzle (11) is constructed as a stepped bore to receive the stepped piston (27), the extension (19) of the stepped bore at the nozzle inlet (18) being of the same diameter as a flange piston (30) of the stepped piston (27), and that a vent (20) extending over the whole length of the nozzle (11) is provided in the nozzle wall and has a nipple (21) for connecting a venting tube (22) which projects into the container (10).

2. An apparatus according to claim 1, characterised in that the length and diameter of the piston rod (28) of the double piston (25) and the diameter of the cylinder bore (16) are dimensioned to give the volume corresponding to the metered dispensing.

3. An apparatus according to claim 1 or 2, characterised in that the passages (23, 24) in the nozzle wall are arranged in such a way that, when the double piston (25) is moved, the opening of the nozzle outlet (17) takes place after the closing of the nozzle inlet (18).

4. An apparatus according to any of claims 1 to 3, characterised in that the dispensing nozzle (11) has an external ring shoulder (15) for interchangeable fastening to a connecting element on a container connection.

5. An apparatus according to any of claims 1 to 4, characterised in that a plurality of dispensing nozzles (11) and double pistons (25) insertable therein are combined to form an interchangeable set of specific volumes to be metered.

6. An apparatus according to any of claims 1 to 5, characterised in that the dispensing nozzle (11) and the double piston (25) insertable therein are made of a material which is resistant to aggressive liquids.

7. An apparatus according to any of claims 1 to 6, characterised in that the double piston (25) is provided with a probe (34), to repeat a metered dispensing process in the dispensing position of the container (10).

8. An apparatus according to any of claims 1 to 7, characterised in that the double piston (25) is made of a material which is dense enough to assist in the dispensing process.

9. An apparatus according to any of claims 1 to 8, characterised in that the piston (26) and stepped piston (27) of the double piston (25) are provided with grooves for sealing pings of suitable shape and suitable material.

10. An apparatus according to any of claims 1 to 9, characterised in that a plurality of interchangeable stepped pistons (27) with closing pistons (29) of different lengths are provided to vary the volume metered.

11. An apparatus according to any of claims 1 to 10, characterised in that the dispensing nozzle (11) is enlarged outside the container (10), in order to extend the cylinder bore (16), and that the piston (26) is adapted to the diameter of the extension.

## Revendications

1. Dispositif doseur permettant de soutirer des volumes exacts de liquides, comprenant un réservoir et une tubulure de soutirage montable sur le raccord de sortie du réservoir et dont le conduit intérieur est un alésage cylindrique pouvant recevoir un piston double mobile dans les deux sens, et dont la paroi est percée d'ouvertures à l'entrée et à la sortie, dispositif doseur caractérisé en ce que le piston double (25) comporte un piston (26) de faible épaisseur agissant sur la sortie (17) de la tubulure et relié par une tige de piston (28) à un piston à étages (27) agissant au niveau de l'entrée (18) de la tubulure, l'alésage cylindrique (16) de la tubulure (11) servant de logement au piston à étages (27) présentant des zones de différents diamètres, la zone large (19) située à l'entrée (18) de la tubulure étant adaptée au diamètre du piston à collet (30) faisant partie du piston à étages (27), la paroi de la tubulure (11) contenant, sur toute sa longueur, un canal de mise à l'atmosphère (20) terminé par un embout (21) raccordé à un tuyau d'aération (22) pénétrant dans le réservoir (10).

2. Dispositif doseur selon la revendication 1, caractérisé en ce que la longueur et le diamètre de la tige (28) du piston double (25), ainsi que le diamètre de l'alésage cylindrique (16) sont dimensionnés en fonction du volume dosé à délivrer.

3. Dispositif doseur selon la revendication 1 ou 2, caractérisé en ce que les ouvertures (23, 24) dans la paroi de la tubulure sont disposées de manière que, dans le mouvement du piston double (25), la libération de la sortie de la tubulure (17) ait lieu après fermeture de l'entrée (18) de la tubulure.

4. Dispositif doseur selon une des revendications 1 à 3, caractérisé en ce que la tubulure de soutirage (11) comporte une collerette annulaire externe (15) permettant de la fixer, de manière amovible au moyen d'un élément de liaison, à un raccord de sortie du réservoir.

5. Dispositif doseur selon une des revendications 1 à 4, caractérisé en ce que plusieurs tubulures de soutirage (11) et doublée pistons (25) pouvant être insérés dedans, sont rassemblés de manière à former un jeu interchangeable de volumes à doser déterminés.

6. Dispositif doseur selon une des revendications 1 à 5, caractérisé en ce que la tubulure de vidange (11) et son double piston inséré dedans (25) sont faits d'un matériau résistant aux liquides agressifs.

7. Dispositif doseur selon une des revendications 1 à 6, caractérisé en ce que le double piston (25) est équipé d'une pointe de touche (35) permettant de reproduire à l'identique le soutirage d'une quantité dosée, en position de soutirage du réservoir (10).

8. Dispositif doseur selon une des revendications 1 à 7, caractérisé en ce que le piston double (25) est fait d'un matériau de densité suffisante pour que le piston appuie le mouvement de vidange.

9. Dispositif doseur selon une des revendications 1 à 8, caractérisé en ce que le piston (26) et le piston à étages (27) constituant le piston double (25) sont munis de gorges pour loger des bagues d'étanchéité de forme et de matière appropriées.

10. Dispositif doseur selon une des revendications 1 à 9, caractérisé en ce que plusieurs pistons à étages (27) différant par la longueur de leur piston de fermeture (29), sont prévus pour obtenir des volumes dosés variés.

11. Dispositif doseur selon une des revendications 1 à 10, caractérisé en ce que la tubulure de vidange (1) dans sa partie extérieure au réservoir (10), est élargie de manière à augmenter l'alésage cylindrique (16), le piston (26) ayant son diamètre adapté à cet élargissement.
